# EUROPEAN PATENT SPECIFICATION

(11) **EP 2 845 772 B1**
(45) Date of publication and mention of the grant of the patent: **03.08.2016**
(21) Application number: 13183283.4
(22) Date of filing: 06.09.2013
(51) Int. Cl.: B60R 19/04, B60R 19/12, B60R 19/18, B60R 19/56, B60R 19/24

(54) **An under-run protection device for a vehicle, and a method for manufacturing such a device**
Unterfahrschutz für ein Fahrzeug und Verfahren zur Herstellung einer solchen Vorrichtung
Dispositif de protection de sous-utilisation de véhicule et procédé de fabrication d'un tel dispositif

(43) Date of publication of application: 11.03.2015
(73) Proprietor: Tata Technologies Pte Ltd, Singapore 068811 (SG)
(72) Inventor: Musale, Gopal, 411057 Pune, Maharashtra (IN); Pattnaik, Jagat, 411057 Pune, Maharashtra (IN); Katti, Aniket, 411057 Pune, Maharashtra (IN); Hanchinhal, Shiva, 411057 Pune, Maharashtra (IN); Ghosh, Subhendu, 411057 Pune, Maharashtra (IN)
(74) Representative: V.O.

(56) References cited:
- EP-A1- 1 972 506
- GB-A- 2 089 737
- JP-A- 2003 327 063
- US-A1- 2008 073 941

## Description

### FIELD OF THE INVENTION

The present invention relates to an energy and impact absorption system used in a vehicle, and more particularly relates to an under-run protection device used in vehicles to absorb impact and energy generated in an event. The present invention also relates to a method for manufacturing such a device.

### BACKGROUND OF THE INVENTION

Use of under-run protection devices as an impact absorption apparatus is well known and well received in the field of body and chassis construction for trucks as a safety apparatus. They play an important role when a truck and a light motor vehicle are involved in a crash.

The ride height of a heavy vehicle is higher compared to a light motor vehicle (LMV), therefore, when involved in a crash with each other, the LMV under-runs the heavy vehicle, making the crash a high impact and fatal. The effect of light vehicle under running a heavy vehicle can be two fold.
1. Occupants of the light vehicle can be in direct contact with structural members of the heavy vehicle, and
2. The heavy vehicle, post impact may render uncontrollable leading to chain of crashes.

US 7399015 patent issued to Patel, et al. discloses a tube like structure along with a plate that would protect in case of a crash. However, the new regulation introduced do not allow for tubular structures for under-run protection, due to the ineffectiveness in case of greater impact crash. The new regulation therefore mandates the face or the surface that is exposed to a vehicle involved in an accident as to be flat. Thus, making the granted patent obsolete for use under present regulations.

EP 1972506 patent application filed by Isuzu Motors discloses an underrun protector mounting structure of vehicle comprising multiple bulky components. In particular the patent application discloses a bulky and heavy bracket in a box form that connects the front underrun protection to the chassis. The bracket utilized a high amount of material to provided effective impact absorbing. However, the underrun protector mounting structure disclosed by EP 1972506 fails when an attempt is made to reduce the weight of underrun protector mounting structure without affecting the impact absorbing capability.

Though the prior arts in the field meet the standards set by various regulating bodies around the world there is a need to reduce the amount of material being used to manufacture the under-run protection devices (UPD) without changing impact absorbing capacity.

### OBJECTIVE OF THE INVENTION

The principal objective of the present invention is to provide an improved energy absorbing structure for heavy vehicles.

Another objective of the invention is to simplify the manufacturing process for an improved energy absorbing structure by reducing the complexity of the component design using an automated designing method wherein only three inputs value help compute all the desired set of dimensions.

Yet another objective of the invention is to provide an improved energy absorbing structure for heavy vehicles with reduced weight and manufacturing method that enables to achieve reduction in weight.

Before the present methods and apparatuses are described, it is to be understood that this invention is not limited to the particular apparatus and methodologies described for an under-run protection device, as there can be multiple possible embodiments of the under run protection device, which are not expressly illustrated, in the present disclosure. It is also to be understood that the terminology used in the description is for the purpose of describing the particular versions or embodiments only, and is not intended to limit the scope of the under-run protection device, which will be limited only by the appended claims.

### SUMMARY OF THE INVENTION

In view of the abovementioned objectives, the present invention provides an under-run protection device for a vehicle according to independent claim 1, as well as a method for manufacturing an under-run protection device for a vehicle according to independent claim 9. More specific embodiments of the invention are set forth in dependent claims 2 through 8, 13 and in dependent claims 10 through 12.

The energy-absorbing under-run protection device according to the invention minimizes the damage and improves the safety of vehicle occupants in a collision where a heavy vehicle and light motor vehicle are involved. The simple design of the under-run protection device according to the invention gives a noteworthy cost savings due to manufacturing and weight reduction. For these reasons, the product and the pricing of the product are very competitive, which are important requirements for an original equipment manufacturer (OEM) to be profitable, especially in the highly competitive market of commercial vehicles.

In the method, according to the invention, for manufacturing an under-run protection device a set of dimensions is computed based on inputs of only three values. The set of dimensions are computed automatically without any trial and error approach. The set of dimensions computed confer to standard requirement of various governing bodies. The use of said method reduces the cost of development for an under-run protection device and enables fast re-designing of the UPD as per requirement.

### BRIEF DESCRIPTION OF DRAWINGS

The foregoing summary, as well as the following detailed description of preferred embodiments, is better understood when read in conjunction with the appended drawings. For the purpose of illustrating the invention, there is shown in the drawings example constructions of the invention; however, the invention is not limited to the specific methods and product disclosed in the drawings:
**Figure1** is an isometric view of the corrugated under-run protection device according to an embodiment.
Figure 2 is an isometric view of the corrugated under-run protection device according to another embodiment.
Figure 3 is an isometric view of the L-shape bracket.
Figure 4 is an isometric view of an assembly illustrating the corrugated under-run protection device and L-shape bracket mounted on a vehicle.
Figure 5 illustrates a standard test requirement for Under-run protection device.
Figure 6 illustrates a model is set up for testing.
Figure 7illustrates an embodiment of the present disclosure under a standard test setup.
Figure 8 shows a flow chart according to an embodiment, illustrating steps involved in designing an under-run protection device.

### DESCRIPTION OF THE INVENTION

Some embodiments of this invention, illustrating its features, will now be discussed:
The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems, methods, apparatuses, and devices similar or equivalent to those described herein can be used in the practice or testing of embodiments of the present invention, the preferred, systems and parts are now described.

The disclosed embodiments are merely exemplary of the invention, which may be embodied in various forms.

### Definitions of the Terms:

The term vehicle refers to at least one element that can be selected from the group comprising of motor vehicle, automobile, personal transport vehicle, Automated guided vehicle, or self-propelled machines.

The terms "system," "systems," "components" or "parts" refers to a common term "systems" and essentially mean the same.

The terms "smart energy absorbing system (SEAS)," "under-run protection device," energy absorbing structure," or "(UPD)," refers to a common term "under-run protection device" and essentially mean the same.

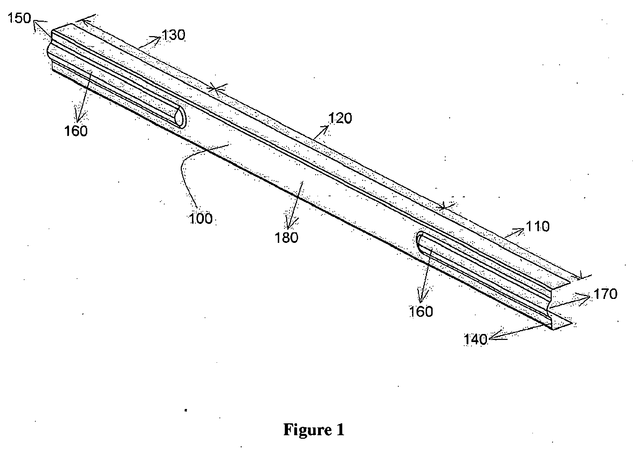

**Figure 1**illustrates an isometric view of the present disclosure according to an embodiment. The **Figure 1** shows a beam **(100)** having a corrugated cross-section. The beam **(100)** has three distinct parts, a part A **(110),** a part B **(120),** and a part C **(130)** between a first edge **(140)** and a second edge **(150)** of the beam **(100).** In the present embodiment the part A **(110)** has at least one crest **(160)** and at least one trough **(170),** such that the crest **(160)** is visible on a first side **(180)** facing the vehicle on which the under-run protection device would be mounted. The part B **(120)** has a C cross-section that extends up to the part C **(130).** The remaining beam that is the part C **(130)** has a corrugated structure wherein the at least one crest **(160)** is visible on a first side **(180)** facing the vehicle. The part C **(130)** is a mirror image of part A **(110).** The length of the at least one crest **(160)** is directly proportional to the length of the part A **(110).**

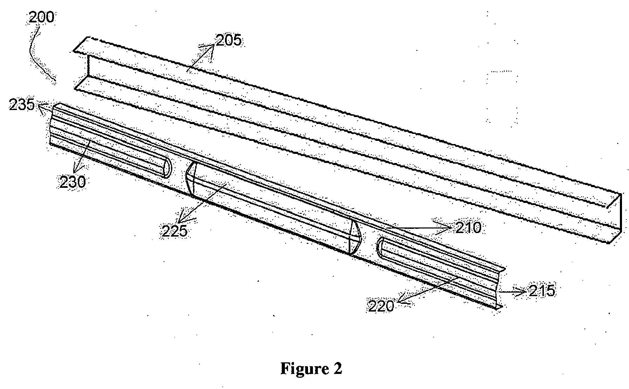

The **Figure 2** illustrates an isometric view of another embodiment of the present disclosure. The **figure 2****,** shows an under-run protection device **(200)** comprising a first beam member **(205)** extending in a lateral direction of the vehicle and mounted on a second beam member **(210).** The first beam member **(205)** has a "C" cross-section and the second beam **(210)** has a corrugated cross-section. In an event of an under-run involving a second vehicle, the first beam is adapted to absorb an impact from the second vehicle. The under-run protection device **(200)** for the vehicle, wherein the first beam member **(205)** and the second beam **(210)** is configured to deform during the impact if the force exerted exceeds a threshold level. According to an embodiment the second beam **(210)** comprises a first portion **(220)** having at least one trough and at least one crest extending from a first edge **(215)** in the direction towards a center of the second beam **(210).** The second beam further comprises a second crest **(225)** extending on either side from the centre of the second beam **(210).** The length of the second crest **(225)is** determined by a distance between two parallel rails or members upon which the second beam **(210)** is mounted. The second beam **(210)** further comprises a second portion **(230)** having at least one another trough and at least one another crest extending from a second edge **(235)** towards the center of the second beam **(210)** having a predefined length.

In another embodiment of the present invention, the second beam **(210)** comprises a plurality of trough and a plurality of crest extending laterally over the entire length of the second beam **(210).**

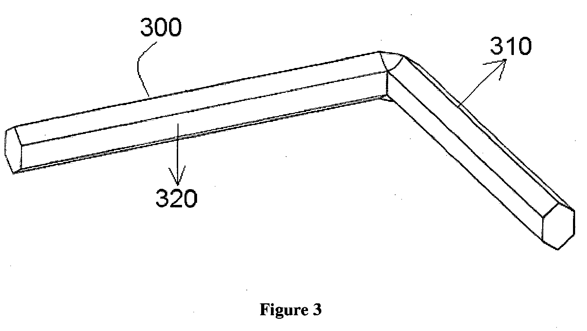

The **Figure 3**illustrates an isometric view of an L-shape bracket **(300)** from a plurality of L-shape bracket, which are mounted on a partial corrugated beam(Not Shown) in an embodiment, and on a complete corrugated first beam (Not Shown) in another embodiment. According to an exemplary embodiment, the L-shape bracket **(300)** is joined to the partial corrugated beam at one arm **(310)** of the L-shape bracket **(300)** and with the vehicle at other arm **(320)** of the L-shape. The L-shape bracket is designed and manufactured such that the L-shape bracket **(300)** starts to deform, in order to resist a displacement of 400 millimeter or more when absorbing an impact or force induced by another vehicle, during a collision. The L-shape bracket **(300)** has a Yield Limit of at least 255 megapascal (MPa). According to an embodiment, the length of the L-shape bracket **(300)** is directly proportional to a weight carrying capacity of the vehicle.

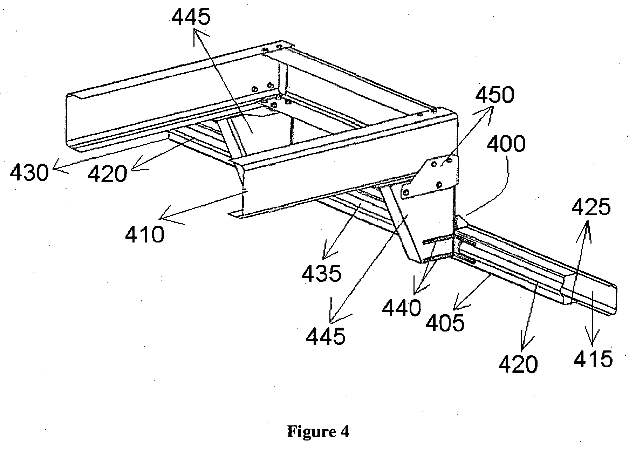

**Figure 4**illustrates an assembly of the under-run protection device **(400)** wherein a first beam member **(405)** extends laterally to the direction of a vehicle **(410).** The under-run protection device **(400)** comprises a second beam member **(415)** mounted via a welding to the first beam member **(405).** The combination of the first beam member **(405)** and the second beam member **(415)** is configured to deform when a load/force acting on the combination exceeds a threshold value. The threshold value is determined by a set of regulation issued by the transportation department or transport governing bodies of various countries. The first beam member **(405)** comprises of a corrugated cross-section **(420, 435).** The corrugated cross section comprises of a plurality of crests and a plurality of troughs.

According to another embodiment, the corrugated cross section extends the entire length of the first member with the plurality of crests and the plurality of troughs having uniform size.

According to another embodiment, the corrugated cross section extends to a predefined length with varying sizes of crest and trough. For example, as illustrated in the Figure 4 the first beam member has a first corrugated cross-section **(420)** that extends to predefined length from a first end **(425)** and a second end **(430),** towards the centre of the first beam **(405).** Further, a second corrugated cross-section **(435)** which extends to a predefined length from the centre of the first beam **(405)** towards the first end **(425)** and the second end **(430).** According to the embodiment illustrated in the **Figure 4****,** a plurality of L-shape brackets **(440)** are used to mount the first beam **(405)** on at least two vertical members **(445).** The vertical member is riveted to the vehicle **(410)** via a connecting bracket (**450**).The corrugated cross-section of the first beam member **(405)** enables reduction in construction/manufacturing material for the said first beam member.

According to an embodiment, the under-run protection device **(400)** wherein the plurality of L-shape bracket **(440)** is welded in the plurality of trough on a side facing the vehicle **(410).**

The present disclosure would be appreciated best by a person skilled in the art when read in conjugation with the following experimental data performed using a standard procedure as required by various regulating bodies:

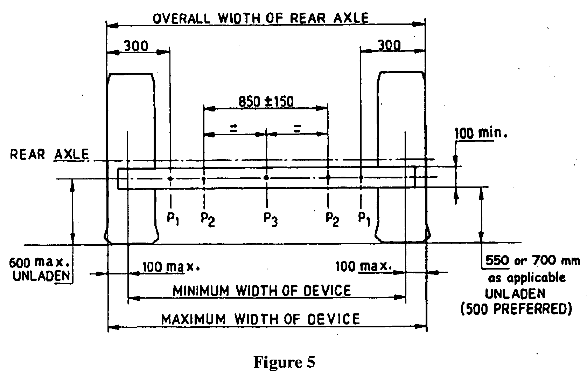

**Figure 5**illustrates a standard test requirement for under-run protection device to be passed by a regulating body. References "P₁," "P₂," and "P₃" show the location where the forces are applied by a ram on the under-run protection device to be tested. The maximum displacement/deflection allowed when force is applied, is 400 mm.

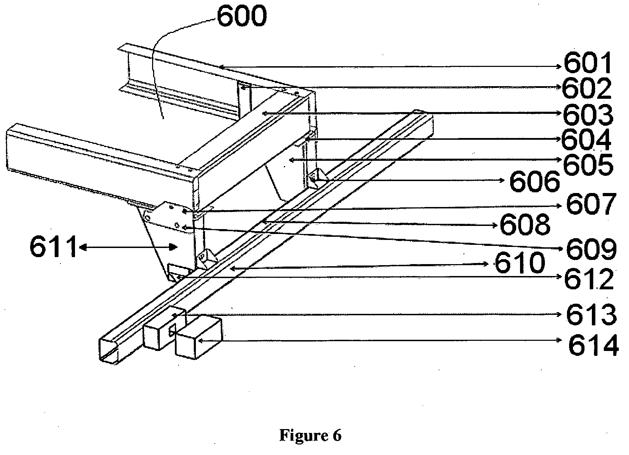

**Figure 6** illustrates the way in which a model **(600)** is set up for testing; at least two long members **(601)** constrained at all the degrees of freedom and parallel to each other. A plurality of long member support brackets **(602)** are mounted on the at least two long members **(601).** The model **(600)** further comprises of a cross-member **(603)** positioned between each of the at least two long member **(601).** A base plate **(604)** is placed between the cross-member **(603)** and a main under-run protection device (UPD) bracket **(605).** The model further comprises of a rear under-run protection device (UPD) beam **(608)** mounted on the main under-run protection device (UPD) bracket **(605)** via a front support bracket **(606).** A connecting bracket **(609)** connects the main under-run protection device (UPD) bracket **(605)** with the at least two long members **(601)** via at least one bolt **(607).** A front under-run protection device (UPD) beam **(610)** is adapted to deform when a load acting on the front under-run protection device (UPD) beam **(610)** exceeds a threshold limit. The front under-run protection device (UPD) beam **(610)** is mounted on the rear under-run protection device (UPD) beam **(608).** The model **(600)** further comprises at least one supporting plate **(611).** A side support bracket **(612)** is mounted between the at least one supporting plate **(611)** and a rear side of the rear under-run protection device (UPD) beam **(608).** A RAM **(613)** and a pusher block **(614)** are mounted on the front under-run protection device (UPD) beam **(610).** The pusher block **(614)** is constrained at all degree of freedom except for translational direction. The Table A, shown below provides the reference number with respect to the **Figure 6** and details of the components shown in model set-up:

**Table A**

| **Reference. No.** | **Part Name** | **Material** | **Thickness** |
|---|---|---|---|
| 1. | Long Member | Bsk 46 | 7 mm |
| 2. | Long member support bracket | Bsk 46 | 5 mm |
| 3. | Cross member | FE 410 | 5 mm |
| 4. | Base Plate for main UPD bracket | FE 410 | 7 mm |
| 5. | Main UPD bracket | FE 410 | 4 mm |
| 6. | Front Support bracket | FE 410 | 5 mm |
| 7. | Bolts | Gr 8.8/10.9 | - |
| 8. | Rear UPD beam | Bsk 46 | 3.15 mm |
| 9. | Connecting bracket | FE 410 | 7 mm |
| 10. | Front UPD beam | Bsk 46 | 3.15 mm |
| 11. | Supporting plate to Main UPD bracket | FE 410 | 4 mm |
| 12. | Side Support bracket | FE 410 | 5 mm |
| 13. | RAM | CI | - |
| 14. | Pusher Block | CI | - |

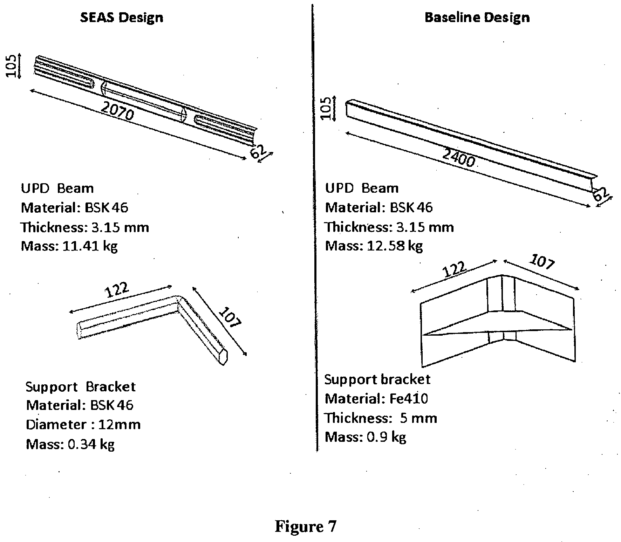

The **Figure 7****,** illustrates an embodiment of the present disclosure referred by **(700)** and the conventional design **(710)** tested under standard stress and strain experimentation. The baseline design or the conventional design is used as a control system.

When a load or force is applied to the setup model at point P₁, the results were captured in the form of a graph shown below as Graph A:

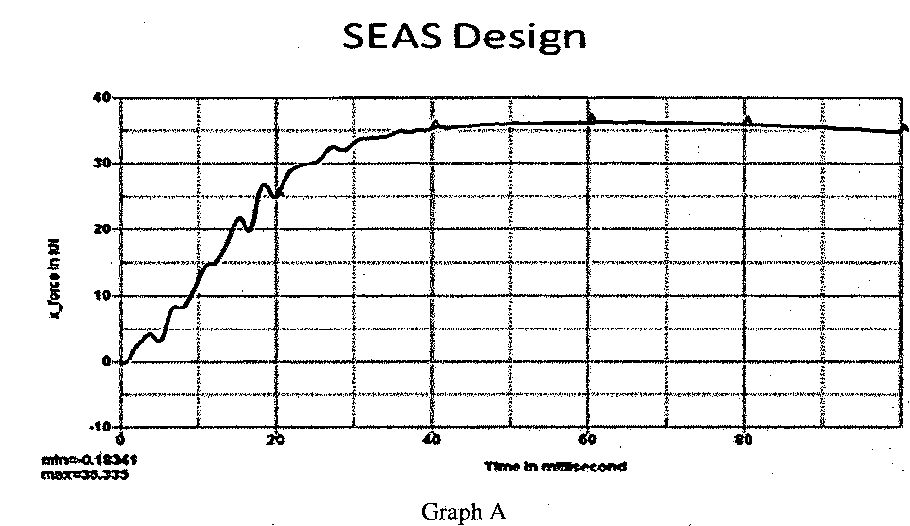

The Graph B shown below shows the test result when a baseline design/conventional design is subjected to similar test conditions.

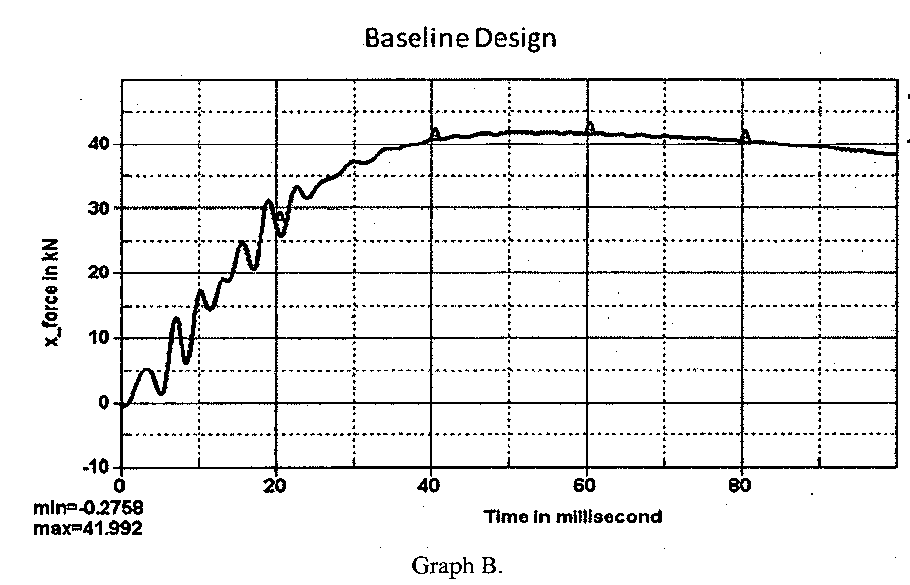

It was observed from the graph A and graph B, that the claimed invention had achieved a 10% overload at 27.5 kilo Newton (kN) before failure compared to a conventional design at the same force.

When the load or force was applied at the location "P₂"to the claimed invention and conventional design it was observed that the claimed invention achieved a 10% overload at 110 kN compared to the conventional design at the same load, this is represented in the Graph C and Graph D shown below:

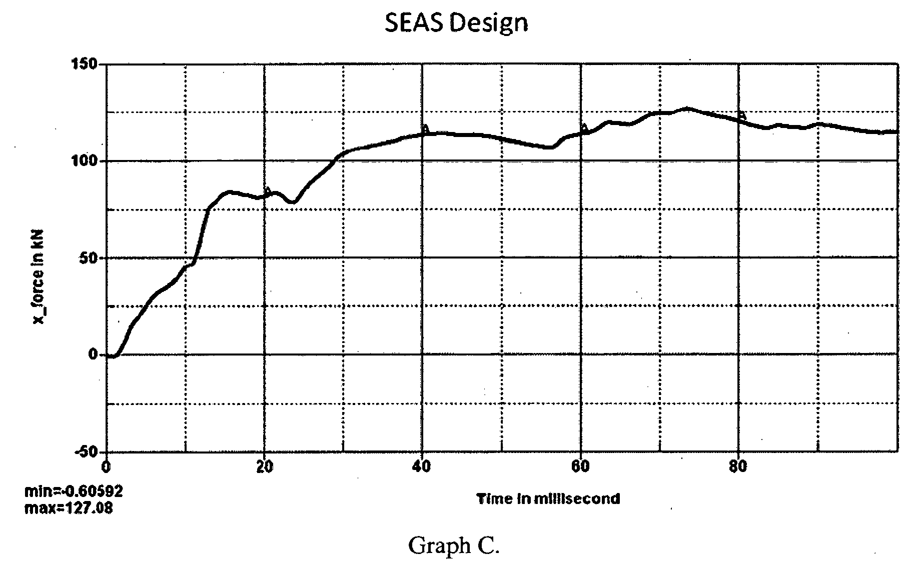

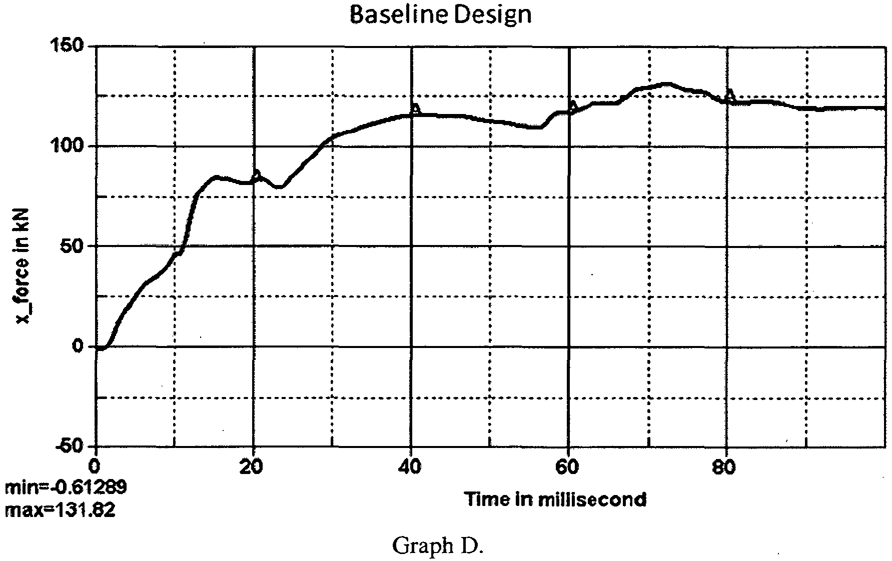

The Table B, illustrated below shows the economical advantage of using the system and apparatus disclosed in the present application.

**Table B**

| Sr. No | Part List | Design | Weight (Kg) | Cost in Rs/Part @ Rs. 48/Kg | Cost in Crore Rupees per Lakh Vehicle Sold |
|---|---|---|---|---|---|
| 1. | Rear UPD Beam | Baseline | 12.582 | 604.0 | 6.03 |
| 2. | Rear UPD Beam | SEAS | 11.141 | 535.0 | 5.34 |
| 3. | UPD Side Bracket | Baseline | 1.797 | 86.0 | 0.86 |
| 4. | UPD Side Bracket | SEAS | 0.667 | 32.0 | 0.32 |
| Cost advantage for UPD Beam : (1) - (2): 6.03-5.34 = 0.69 Cr | | | | | |
| Cost advantage for UPD side bracket: (3) - (4): 0.86 - 0.32 = 0.54 Cr | | | | | |
| | Total Cost Saving : 0.69 + 0.54 = 1.23 Cr | | | | |

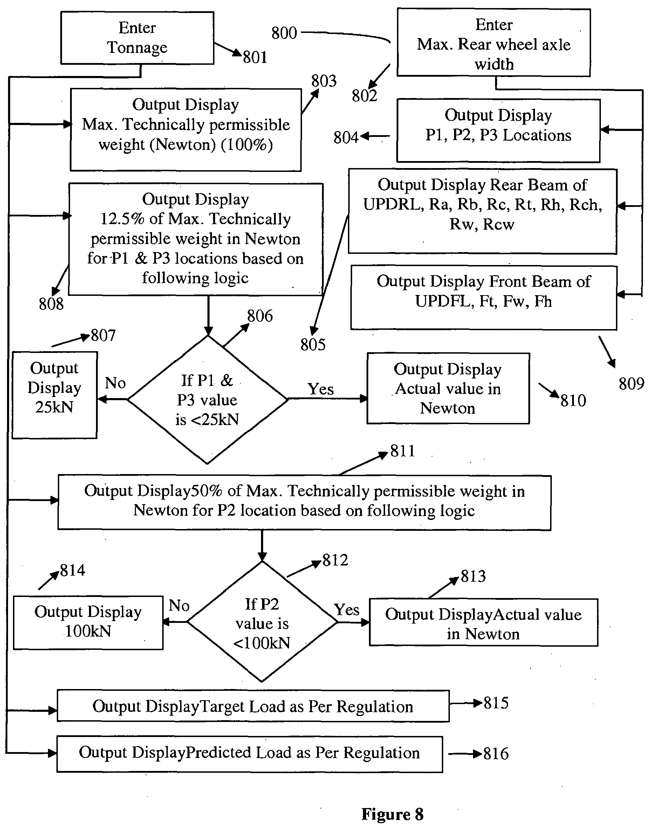

**Figure 8** shows a flow chart according to an embodiment, illustrating steps involved in designing an under-run protection device. The process for designing **(800)** an under-run protection device involves input from a user wherein the user enters only three parameters that are a maximum rear wheel axle width **(802)** across a vehicle, that is perpendicular to the motion of the vehicle, a desired weight of the vehicle **(801)** and a type of material to be used. Based upon the variables entered by a user that is after determining the maximum length of a wheel axle and weight of vehicle a first set of dimension and a second set of dimension are calculated. The first set of dimension is associated with a corrugated beam and the second set of dimension is associated with a second beam having a "C" cross-section. Utilizing the maximum rear wheel axle width position of "P₁," "P₂," and "P3" are determined **(804).** Positions "P₁," "P₂," and "P₃" illustrates the location where force or a load would act on the assembly of the corrugated beam with the secondary beam. Further, the first set of dimension **(805)** comprises of length of the corrugated beam, length of a plurality of crest, length of a plurality of trough, width of the plurality of crest, width of the plurality of the trough, width of the corrugated beam, thickness of the corrugated beam, height of the corrugated beam, height of the plurality of the crest. The second set of dimension **(809)** comprises of length of the second beam, width of the second beam, height of the second beam, thickness of the second beam.

According to the present embodiment, a maximum allowable weight (803) for the vehicle would depend on the weight of the vehicle (801). The process further comprises step of computing and displaying the permissible weight or load or force acting at positions "P1," and "P3". When the permissible force that can be exerted on location "P1" and "P3" exceeds 25 kilo Newton (kN) then only 25 kN is rendered (807) and when it's below 25 kN then the actual permissible force is rendered (810). For position "P2" when permissible force exceeds 100 kilo Newton (kN) then only 100 kN is rendered (814) and when its below 100 kN then the actual permissible force is rendered (813). According to an embodiment "P1" and "P3" are computed as 12.5% of the maximum allowable weight (803) and "P2" is computed as 50% of the maximum allowable weight (803). The flow chart illustrating the designing on the under-run protection device further comprises of rendering the target load as per the regulation **(815)** of various governing bodies and predicted load **(816).**

## Claims

1. An under-run protection device for a vehicle (410), **characterized by**:
a first beam member (405) extending laterally to the direction of a vehicle (410), wherein a partial portion (420, 435) of the first beam member (405) has a corrugated cross-section;
a second beam member (415) mounted on the first beam member, positioned and adapted to absorb an impact from another vehicle by deforming when the impact force exceeds a threshold value; and
a plurality of L-shaped brackets (440, 300), wherein a one arm of the L-shape of each of the plurality of L-shaped brackets (440) is joined to the first beam member (405),wherein an other arm of the L-shape of each of the plurality of L-shaped brackets (440) is joined to a vertical member (445), wherein vertical member is riveted to the vehicle (410) via a connecting bracket (450), wherein the one arm of the L-shape is parallel to the first beam member (405), wherein the other arm of the L-shape is perpendicular to the first beam member (405), and wherein the one arm of each of the plurality of L-shaped brackets (440) is welded in the trough of the first beam member (405) having corrugated cross-section.

2. The under-run protection device according to any one of the preceding claims, wherein the at least partially corrugated first beam member (405) has a Yield Limit of at least 340 mega Pascal (MPa).

3. The under-run protection device according to any one of the preceding claims wherein the at least partially corrugated first beam member (405) enables reduction in construction/manufacturing material for the second beam member (415).

4. The under-run protection device according to any one of the preceding claims, wherein the first beam member (100) comprises at least two distinguishable portions (110, 120), positioned adjacent to each other, wherein the first portion (110) has a corrugated cross-section and the second portion (120) has a "C" cross-section.

5. The under-run protection device according to any one of the preceding claims, wherein the second beam member (415) is extending in the lateral direction of the vehicle (410).

6. The under-run protection device according to any one of the preceding claims, wherein the first beam member (405) is configured to deform during the impact if the force exerted on the said second beam member (415) exceeds a threshold level.

7. The under-run protection device according to any one of the preceding claims, wherein the length of the plurality of L-shaped brackets (440) are directly proportional to a weight carrying capacity of the vehicle (410).

8. The under-run protection device according to any one of the preceding claims, wherein a displacement of at least 400 millimeter or more by the said first beam member (405) is resisted by the plurality of L-shaped brackets (440).

9. A method for manufacturing an under-run protection device for a vehicle (410), according to claim 1,
**characterized by**:
determining a maximum length of a wheel axle of the vehicle and computing a first set of dimensions associated with the at least partially corrugated first beam member (405) based on the maximum length of the wheel axle;
determining weight of the vehicle and generating a second set of dimensions associated with the second beam member (415) based on the weight of the vehicle, wherein the second beam member (415) comprises a "C" section mounted on the first beam member;
casting a die having a profile complementary to the first set of dimensions; and
imparting the profile of the casted die to the at least partially corrugated first beam member (405).

10. The method according to claim 9, wherein the first set of dimensions comprises at least one dimension from a group consisting of length of the at least partially corrugated first beam member (405), length of a plurality of crest, length of a plurality of trough, width of the plurality of crest, width of the plurality of the trough, width of the at least partially corrugated first beam member (405), thickness of the at least partially corrugated first beam member (405),height of the at least partially corrugated first beam member (405), height of the plurality of the crest, and combination thereof.

11. The method according to any one of claims 9-10, wherein the second set of dimensions comprises at least one dimension from a group consisting of length of the second beam member (415), width of the second beam member (415), height of the second beam member (415), thickness of the second beam member (415), and combination thereof.

12. The method according to any one of claims 9-11 wherein a maximum allowable force that acts on the at least partially corrugated first beam member (405) at least one point is determined by the maximum weight of the vehicle (410).

13. The under-run protection device for a vehicle of claim 1, the partial corrugated cross-section (420, 435) comprises of a plurality of crests and a plurality of troughs of uniform size.

## Patentansprüche

1. Unterfahrschutz für ein Fahrzeug (410), **gekennzeichnet durch**:
ein erstes Auslegerelement (405), das lateral zu der Richtung eines Fahrzeugs (410) verläuft, wobei ein Teilabschnitt (420, 435) des ersten Auslegerelements (405) einen gewellten Querschnitt hat;
ein zweites Auslegerelement (415), montiert an dem ersten Auslegerelement, positioniert und geeignet zum Absorbieren eines Aufpralls von einem anderen Fahrzeug **durch** Verformung, wenn die Aufprallkraft einen Schwellenwert überschreitet; und
mehrere L-förmige Klammern (440, 300), wobei ein Arm der L-Form von jeder der mehreren L-förmigen Klammern (440) mit dem ersten Auslegerelement (405) verbunden ist, wobei ein anderer Arm der L-Form von jeder der mehreren L-förmigen Klammern (440) mit einem vertikalen Element (445) verbunden ist, wobei das vertikale Element über eine Verbindungsklammer (450) an dem Fahrzeug (410) festgenietet ist, wobei der eine Arm der L-Form parallel zu dem ersten Auslegerelement (405) ist, wobei der andere Arm senkrecht zum ersten Auslegerelement (405) ist, und wobei der eine Arm von jeder der mehreren L-förmigen Klammern (440) in der Mulde des ersten Auslegerelements (405) mit gewelltem Querschnitt verschweißt ist.

2. Unterfahrschutz nach einem der vorhergehenden Ansprüche, wobei das mindestens teilweise gewellte erste Auslegerelement (405) eine Dehngrenze von mindestens 340 Megapascal (MPa) hat.

3. Unterfahrschutz nach einem der vorhergehenden Ansprüche, wobei das mindestens teilweise gewellte erste Auslegerelement (405) eine Verminderung im Konstruktions-/Herstellungsmaterial für das zweite Auslegerelement (415) ermöglicht.

4. Unterfahrschutz nach einem der vorhergehenden Ansprüche, wobei das erste Auslegerelement (100) mindestens zwei unterscheidbare Abschnitte (110, 120) umfasst, die nebeneinander positioniert sind, wobei der erste Abschnitt (110) einen gewellten Querschnitt hat und der zweite Abschnitt (120) einen "C"-Querschnitt hat.

5. Unterfahrschutz nach einem der vorhergehenden Ansprüche, wobei das zweite Auslegerelement (415) in lateraler Richtung des Fahrzeugs (410) verläuft.

6. Unterfahrschutz nach einem der vorhergehenden Ansprüche, wobei das erste Auslegerelement (405) konfiguriert ist, sich beim Aufprall zu verformen, wenn die auf das zweite Auslegerelement (415) ausgeübte Kraft einen Schwellenwert überschreitet.

7. Unterfahrschutz nach einem der vorhergehenden Ansprüche, wobei die Länge der mehreren L-förmigen Klammern (440) direkt proportional zu einer Gewichttragfähigkeit des Fahrzeugs (410) ist.

8. Unterfahrschutz nach einem der vorhergehenden Ansprüche, wobei die mehreren L-förmigen Klammern (440) einer Verschiebung von mindestens 400 Millimeter oder mehr durch das erste Auslegerelement (405) standhalten.

9. Verfahren zur Herstellung eines Unterfahrschutzes für ein Fahrzeug (410) nach Anspruch 1, **gekennzeichnet durch**:
Bestimmung einer maximalen Länge einer Radachse des Fahrzeugs und Berechnung eines ersten Satzes von Abmessungen, verbunden mit dem mindestens teilweise gewellten ersten Auslegerelement (405), basierend auf der maximalen Länge der Radachse;
Bestimmung des Gewicht des Fahrzeugs und Erzeugen eines zweiten Satzes von Abmessungen, verbunden mit dem zweiten Auslegerelement (415), basierend auf dem Gewicht des Fahrzeugs, wobei das zweite Auslegerelement (415) einen "C"-Querschnitt, montiert an dem ersten Auslegerelement, umfasst;
Gießen eines Gussteils mit einem Profil, das komplementär zu dem ersten Satz von Abmessungen ist; und Übermitteln des Profils des Gussteils auf das mindestens teilweise gewellte erste Auslegerelement (405).

10. Verfahren nach Anspruch 9, wobei der erste Satz von Abmessungen mindestens eine Abmessung von einer Gruppe, bestehend aus Länge des mindestens teilweise gewellten ersten Auslegerelements (405), Länge von mehreren von Scheiteln, Länge von mehreren von Mulden, Breite von mehreren von Scheiteln, Breite von mehreren von Mulden, Breite des mindestens teilweise gewellten ersten Auslegerelements (405), Dicke des mindestens teilweise gewellten ersten Auslegerelements (405), Höhe des mindestens teilweise gewellten ersten Auslegerelements (405), Höhe der mehreren von Mulden und Kombinationen davon, umfasst.

11. Verfahren nach einem der Ansprüche 9, 10, wobei der zweite Satz von Abmessungen mindestens eine Abmessung aus einer Gruppe, bestehend aus Länge des zweiten Auslegerelements (415), Breite des zweiten Auslegerelements (415), Höhe des zweiten Auslegerelements (415), Dicke des zweiten Auslegerelements (415) und Kombinationen davon, umfasst.

12. Verfahren nach einem der Ansprüche 9-11, wobei eine maximal zulässige Kraft, die auf das mindestens teilweise gewellte erste Auslegerelement (405) an mindestens einem Punkt einwirkt, durch das Höchstgewicht des Fahrzeugs (410) bestimmt wird.

13. Unterfahrschutz für ein Fahrzeug nach Anspruch 1, wobei der teilweise gewellte Querschnitt (420, 435) mehrere Scheitel und mehrere Mulden von einheitlicher Größe umfasst.

## Revendications

1. Dispositif de protection contre l'encastrement pour un véhicule (410), **caractérisé par** :
un premier élément de traverse (405) s'étendant latéralement à la direction d'un véhicule (410), dans lequel une partie partielle (420, 435) du premier élément de traverse (405) présente une section transversale ondulée ;
un second élément de traverse (415) monté sur le premier élément de traverse, positionné et adapté pour absorber un impact provenant d'un autre véhicule en se déformant lorsque la force d'impact dépasse une valeur seuil ; et
une pluralité de supports en forme de L (440, 300), dans lequel un premier bras de la forme de L de chaque support de la pluralité de supports en forme de L (440) est relié au premier élément de traverse (405), dans lequel un autre bras de la forme de L de chaque support de la pluralité de supports en forme de L (440) est relié à un élément vertical (445), dans lequel l'élément vertical est riveté au véhicule (410) par l'intermédiaire d'un support de liaison (450), dans lequel le premier bras de la forme de L est parallèle au premier élément de traverse (405), dans lequel l'autre bras de la forme de L est perpendiculaire au premier élément de traverse (405), et dans lequel le premier bras de chaque support de la pluralité de supports en forme de L (440) est soudé dans le creux du premier élément de traverse (405) ayant une section transversale ondulée.

2. Dispositif de protection contre l'encastrement selon l'une quelconque des revendications précédentes, dans lequel le premier élément de traverse au moins partiellement ondulé (405) présente une limite élastique d'au moins 340 Mégapascals (MPa).

3. Dispositif de protection contre l'encastrement selon 1"une quelconque des revendications précédentes, dans lequel le premier élément de traverse au moins partiellement ondulé (405) permet une réduction du matériau de construction/fabrication pour le second élément de traverse (415).

4. Dispositif de protection contre l'encastrement selon l'une quelconque des revendications précédentes, dans lequel le premier élément de traverse (100) comprend au moins deux parties différenciables (110, 120), positionnées de manière adjacente l'une à l'autre, dans lequel la première partie (110) présente une section transversale ondulée et la deuxième partie (120) présente une section transversale en « C ».

5. Dispositif de protection contre l'encastrement selon l'une quelconque des revendications précédentes, dans lequel le second élément de traverse (415) s'étend dans la direction latérale du véhicule (410).

6. Dispositif de protection contre l'encastrement selon l'une quelconque des revendications précédentes, dans lequel le premier élément de traverse (405) est configuré pour se déformer durant l'impact si la force exercée sur ledit second élément de traverse (415) dépasse un niveau seuil.

7. Dispositif de protection contre l'encastrement selon l'une quelconque des revendications précédentes, dans lequel la longueur de la pluralité de supports en forme de L (440) est directement proportionnelle à une capacité de transport de poids du véhicule (410).

8. Dispositif de protection contre l'encastrement selon l'une quelconque des revendications précédentes, dans lequel un déplacement d'au moins 400 millimètres ou plus par ledit premier élément de traverse (405) est contré par la pluralité de supports en forme de L (440).

9. Procédé de fabrication d'un dispositif de protection contre l'encastrement pour un véhicule (410) selon la revendication 1, **caractérisé par** :
la détermination d'une longueur maximale d'un essieu de roue du véhicule et le calcul d'un premier ensemble de dimensions associées au premier élément de traverse au moins partiellement ondulé (405) sur la base de la longueur maximale de l'essieu de roue ;
la détermination du poids du véhicule et la génération d'un deuxième ensemble de dimensions associées au second élément de traverse (415) sur la base du poids du véhicule, dans lequel le second élément de traverse (415) comprend une section en « C » montée sur le premier élément de traverse ;
le coulage d'une matrice ayant un profil complémentaire du premier ensemble de dimensions ; et
la transmission du profil de la matrice coulée au premier élément de traverse au moins partiellement ondulé (405).

10. Procédé selon la revendication 9, dans lequel le premier ensemble de dimensions comprend au moins une dimension issue d'un groupe constitué de la longueur du premier élément de traverse au moins partiellement ondulé (405), de la longueur d'une pluralité de crêtes, de la longueur d'une pluralité de creux, de la largeur de la pluralité de crêtes, de la largeur de la pluralité de creux, de la largeur du premier élément de traverse au moins partiellement ondulé (405), de l'épaisseur du premier élément de traverse au moins partiellement ondulé (405), de la hauteur du premier élément de traverse au moins partiellement ondulé (405), de la hauteur de la pluralité de crêtes, et de combinaisons de celles-ci.

11. Procédé selon l'une quelconque des revendications 9-10, dans lequel le deuxième ensemble de dimensions comprend au moins une dimension issue d'un groupe constitué de la longueur du second élément de traverse (415), de la largeur du second élément de traverse (415), de la hauteur du second élément de traverse (415), de l'épaisseur du second élément de traverse (415), et de combinaisons de celles-ci.

12. Procédé selon l'une quelconque des revendications 9-11, dans lequel une force maximale acceptable qui agit sur le premier élément de traverse au moins partiellement ondulé (405) au niveau d'au moins un point est déterminée par le poids maximal du véhicule (410).

13. Dispositif de protection contre l'encastrement pour un véhicule selon la revendication 1, la section transversale partiellement ondulée (420, 435) étant composée d'une pluralité de crêtes et d'une pluralité de creux de taille uniforme.
